(19) Europäisches Patentamt
European Patent Office
Office européen des brevets

(11) **EP 1 559 882 B1**

(12) **EUROPÄISCHE PATENTSCHRIFT**

(45) Veröffentlichungstag und Bekanntmachung des Hinweises auf die Patenterteilung:
**19.09.2007 Patentblatt 2007/38**

(51) Int Cl.:
*F01N 3/28* (2006.01)　　*B01J 35/04* (2006.01)

(21) Anmeldenummer: **05001368.9**

(22) Anmeldetag: **24.01.2005**

(54) **Abgasreinigungsanordnung und Verfahren zur Herstellung einer Abgasreinigungsanordnung**

Exhaust purification device and process for manufacturing an exhaust purification device

Dispositif de purification des gaz d'échappement et procédé de fabrication d'un dispositif de purification des gaz d'échappement

(84) Benannte Vertragsstaaten:
**DE FR GB IT SE**

(30) Priorität: **27.01.2004 DE 102004004042**

(43) Veröffentlichungstag der Anmeldung:
**03.08.2005 Patentblatt 2005/31**

(73) Patentinhaber: **J. Eberspächer GmbH & Co. KG**
**73730 Esslingen (DE)**

(72) Erfinder: **Gaiser, Gerd, Dr.**
**72768 Reutlingen (DE)**

(74) Vertreter: **Schorr, Frank Jürgen et al**
**Diehl & Partner,**
**Augustenstrasse 46**
**80333 München (DE)**

(56) Entgegenhaltungen:
**DE-A1- 19 702 569**　　　**GB-A- 2 094 658**
**US-A- 3 982 981**　　　**US-A1- 2003 180 205**
**US-B1- 6 207 116**

- **PATENT ABSTRACTS OF JAPAN Bd. 1998, Nr. 04, 31. März 1998 (1998-03-31) & JP 09 323132 A (NISSAN MOTOR CO LTD), 16. Dezember 1997 (1997-12-16)**
- **PATENT ABSTRACTS OF JAPAN Bd. 013, Nr. 211 (C-597), 17. Mai 1989 (1989-05-17) & JP 01 030651 A (CALSONIC CORP), 1. Februar 1989 (1989-02-01)**

**Beschreibung**

Die vorliegende Erfindung betrifft eine Abgasreinigungsanordnung sowie ein Verfahren zum Herstellen einer Abgasreinigungsanordnung zur Reinigung eines Abgases einer Verbrennungskraftmaschine.

Es ist allgemein bekannt, daß mit fossilen Brennstoffen betriebene Brennkraftmaschinen Schadstoffe emittieren. Zu diesen Schadstoffen zählen insbesondere sogenannte Feststoffpartikel, wie z. B. Rußpartikel, welche für den menschlichen Organismus schädlich sind. Wie auch bekannt ist, werden diese Rußpartikel insbesondere von mit Dieselkraftstoff betriebenen Brennkraftmaschinen ausgestoßen.

Zur Reduzierung dieser Feststoffpartikel wird nun eine Abgasreinigungsanordnung, d.h. ein sogenannter Partikelfilter verwendet, welcher im Abgasstrang einer Brennkraftmaschine angeordnet ist. Es ist vorstellbar, daß die Abgasreinigungsanordnung auch katalytische Eigenschaften aufweist, um von der Verbrennungskraftmaschine ausgestossenes Kohlenmonoxid CO, Kohlenwasserstoffe HC und Stickoxide $NO_x$ in die unschädlichen Stoffe $H_2O$, $CO_2$, und $N_2$ umzuwandeln. Dabei läßt sich eine Verwendung der Abgasreinigungsanordnung als Partikelfilter nicht klar von einer Verwendung der Abgasreinigungsanordnung als Katalysator trennen.

JP 1030651 offenbart eine mögliche Konfiguration eines Katalysatorsträgers.

Dabei ist von besonderem Interesse, den Partikelfilter derart zu gestalten, daß er gegenüber mechanischen Belastungen, wie z.B. von der Brennkraftmaschine erzeugten Abgaspulsationen, besonders stabil ist, und eine hohe Abgasreinigungswirkung erzielt.

Es ist demgemäß eine Aufgabe der vorliegenden Erfindung, eine gegenüber mechanischen Belastungen stabile Abgasreinigungsanordnung sowie ein Verfahren zum einfachen Herstellen einer Abgasreinigungsanordnung vorzuschlagen.

Hierzu schlägt die Erfindung eine Abgasreinigungsanordnung zur Reinigung eines Abgases einer Verbrennungskraftmaschine vor, wobei die Abgasreinigungsanordnung eine Mehrzahl von Platten, welche jeweils nebeneinander eine Vielzahl von Oberflächenbereichen aufweisen, welche abwechselnd in einander entgegengesetzte Richtungen gekrümmt sind, wobei die Mehrzahl von Platten zu einem Stapel übereinandergefügt ist, wobei zwei im Stapel einander benachbarte Platten jeweils eine Vielzahl von Kontaktflächen aufweisen, an denen die beiden Platten aneinander anliegen, und wobei zwischen in einer Plattenebene einander benachbarten Anlagebereichen die beiden Platten einen Abstand voneinander aufweisen, so daß durch die beiden Platten Abgasströmungskanäle begrenzt sind, und wobei für wenigstens 50 % der Kontaktflächen der beiden Platten gilt:

$$\frac{D}{A} > 0,05 ,$$

insbesondere >0,07, und weiter bevorzugt >0,10, wobei

D   eine maximale Ausdehnung der Kontaktflächen in der Plattenebene ist, und

A   ein Abstand zwischen Hauptebenen der beiden Platten ist.

Ein Vorteil der vorliegenden Erfindung besteht darin, daß durch die vergrößerten gemeinsamen Kontaktflächen zwischen unmittelbar benachbarten Platten, im Gegensatz zu Kontakt- bzw. Berührungspunkten, eine stabile Stapel-Anordnung aller Platten zusammen erzeugt wird, d.h. eine Bewegung der Platten gegeneinander wird vermieden. Somit wird auch ein Materialabrieb zwischen den Platten, wie er bei punktförmiger Berührung auftritt, vermieden. Die Oberflächenbereiche der Platten können beliebig geformt bzw. gekrümmt sein, z.B. in einer zweidimensionalen regelmäßigen Anordnung, wie z.B. auch Wellen.

Eine Partikelfilterung wird dadurch erzielt, daß sich die im Abgas befindlichen Partikel an den Plattenwänden ablagern, wenn das Abgas in den Abgasströmungskanälen entlangströmt und aufgrund der gekrümmten Struktur der Platten zu ständigen Richtungsänderungen gezwungen wird. D.h. bei einer Richtungsänderung an einem gekrümmten Plättenbereich treffen die Partikel auf eine Plattenwand und können dort haftenbleiben.

In einer bevorzugten Ausführungsform weist wenigstens eine der zwei einander benachbarten Platten eine derart gewellte Plattenstruktur auf, so daß entlang von im wesentlichen geradlinig sich erstreckenden Linien abwechselnd Wellenberge und Wellentäler gebildet sind. Durch die gewellte Struktur erhält die Platte in sich eine Stabilität, und dadurch auch der aus der Vielzahl von gewellten Platten zusammengesetzte Stapel, welcher den Partikelfilter bildet.

In einer weiteren bevorzugten Ausführungsform sind die Kontaktflächen der wenigstens einen Platte wenigstens bereichsweise mit einem geringeren Abstand von der Hauptebene angeordnet als entlang der Linien zwischen den Kontaktflächen benachbarter Bereiche der wenigstens einen Platte. Dadurch können z.B. die Wellentäler einer Platte derart mit den Kontaktflächen einer unmittelbar benachbarten, d.h. genau darunter angeordneten Platte in Eingriff kommen, so daß sich die Form der Kontaktflächen der Form der Wellentäler anpasst. Dadurch wird ein Verschieben der Platten gegeneinander in Richtung der Plattenebenen vermieden.

Zweckmäßigerweise sind die Wellenberge und die Wellentäler der jeweils zwei im Stapel benachbarten Materialschichten unter einem Winkel von mehr als 10° zueinander orientiert. Dadurch wird eine besonders ausgeprägte Richtungsänderung des Abgases zwischen den Materialschichten erzielt, was zu einer effektiveren Partikelabscheidung führt.

In weiterer Ausgestaltung der Erfindung ist ein Werkstoff der Platten ein Metallblech, welches gut verformbar ist und in sich eine hohe Stabilität aufweist.

In noch weiterer Ausgestaltung der Erfindung sind die Platten aus einem für das Abgas permeablen porösen Werkstoff gebildet. Ein poröser Werkstoff für die Platten hat den Vorteil, daß eine Partikelabscheidung nun zum einen durch das Überströmen des Abgases der Platten erfolgt, zum anderen kann das Abgas durch die porösen Platten hindurchströmen und dabei gefiltert werden, da Partikel aus dem Abgas beim Durchtritt durch die porösen Platten steckenbleiben können. Das Hindurchströmen erfolgt aufgrund von Druckunterschieden zwischen dem Abgas zugewandten Oberflächen der porösen Platten (sogenannte Luvseiten) und dem Abgas abgewandten Oberflächen der porösen Platten (sogenannte Leeseiten). Durch das Durchströmen des Abgases durch die porösen Platten wird die Abgasfilterwirkung erhöht.

Bevorzugterweise liegen die den an seiner Abgas-Austrittsseite bzw. an seiner Abgas-Eintrittsseite geschlossenen Abgasströmungskanal begrenzenden Platten an der Austrittsseite bzw. an der Eintrittsseite entlang einer Linie quer zur Strömungsrichtung aneinander an. Dadurch werden Abgasströmungskanäle abwechselnd an ihrer Eintrittsseite bzw. an ihrer Austrittsseite quasi geschlossen, wodurch das Abgas zu Durchtritten durch die porösen Platten gezwungen und die Abgasfilterwirkung weiter erhöht wird.

In weiterer Ausgestaltung der Erfindung liegen die den an seiner Austrittsseite bzw. an seiner Eintrittsseite geschlossenen Abgasströmungskanal begrenzenden Platten an der Austrittsseite bzw. an der Eintrittsseite entlang einer Linie quer zur Strömungsrichtung aneinander an. Dadurch wird das Verschliessen von Abgasströmungskanälen auf der Eintritts- bzw. Austrittsseite erleichtert.

In noch weiterer Ausgestaltung der Erfindung sind die den an seiner Austrittsseite bzw. an seiner Eintrittsseite geschlossenen Abgasströmungskanal begrenzenden Platten entlang der Linie durch Kleben oder/und durch Verschweißen oder/und durch Falzen miteinander verbunden. Diese Verbindungsarten sind eine besonders einfache und effiziente Weise, die Abgasströmungskanälen an der Eintritts- bzw. Austrittsseite zu verschließen.

Es wird bevorzugt, daß die den an seiner Austrittsseite bzw. an seiner Eintrittsseite geschlossenen Abgasströmungskanal begrenzenden Platten an der Austrittsseite bzw. an der Eintrittsseite durch einen quer zur Strömungsrichtung sich erstreckenden durchgehenden Steg miteinander verbunden sind.

Es wird weiterhin bevorzugt, daß die den an seiner Austrittsseite bzw. an seiner Eintrittsseite geschlossenen Abgasströmungskanal begrenzenden Platten an der Austrittsseite bzw. an der Eintrittsseite integral miteinander verbunden sind. Dies ist eine besonders effiziente Weise, die Abgasströmungskanäle an Ein- bzw. Austrittsseiten zu schliessen.

Zweckmäßigerweise weist ein Hauptebenenabstand zwischen jeweils zwei im Stapel benachbarten Platten einen Wert in einem Bereich von 0,5 mm bis 8,0 mm, insbesondere 1,0 mm bis 4,0 mm, und noch bevorzugter 1,5 bis 3,0 mm, auf. Dabei ist der Hauptebenenabstand zwischen benachbarten Platten der Abstand zwischen (gedachten) mittleren Ebenen der Platten.

Bevorzugt ist eine Auslenkung der Wellenberge bzw. Wellentäler jeweils aus den Hauptebenen größer als 1 mm.

Weiter bevorzugt ist eine Auslenkung der Wellenberge bzw. Wellentäler aus deren Hauptebenen kleiner als 7 mm, insbesondere kleiner als 5 mm und weiter bevorzugt kleiner als 3 mm.

Noch weiter bevorzugt ist ein lateraler Abstand in Plattenerstreckungsrichtung zwischen einander benachbarten Wellenbergen bzw. Wellentälern größer als 2 mm, insbesondere größer als 3 mm.

Zweckmäßigerweise ist ein Abstand in Plattenerstreckungsrichtung zwischen einander benachbarten Wellenbergen bzw. Wellentälern kleiner als 7 mm, insbesondere kleiner als 5 mm.

Bevorzugterweise ist eine Dicke der Platten größer als 0,1 mm, insbesondere größer als 0,3 mm.

Weiterhin bevorzugt ist eine Dicke der Platten kleiner als 2,0 mm, insbesondere kleiner als 1,2 mm.

Bevorzugterweise ist der für das Abgas permeable poröse Werkstoff als ein Gewebe oder/und ein Vlies oder/und ein Geflecht aus einem Fasermaterial gefertigt.

In noch weiterer Ausgestaltung der Erfindung umfaßt das Fasermaterial Metallfasern oder/und Keramikfasern.

Zweckmäßigerweise ist der für das Abgas permeable poröse Werkstoff aus einem Pulvermaterial gefertigt.

In anderer Ausgestaltung der Erfindung ist der für das Abgas permeable poröse Werkstoff aus einem Schaum gefertigt.

In noch anderer Ausgestaltung der Erfindung ist der für das Abgas permeable poröse Werkstoff als Sinterkörper gefertigt.

Es sind auch Kombinationen hiervon denkbar, d.h. zum Beispiel ein Fasermaterial oder Gewebe als Grundkörper bzw. Träger, welcher mit einem aufgesintertem metallischen oder keramischen Pulvermaterial beschichtet ist.

In weiterer Ausgestaltung der Erfindung umfaßt der für das Abgas permeable poröse Werkstoff ein Katalysatormaterial, insbesondere aus wenigstens einem Edelmetall oder/und wenigstens einem Metalloxid oder/und wenigstens einem Mischoxid, oder/und der poröse Werkstoff umfaßt ein Sauerstoff-Speichermaterial, welches insbesondere Cer oder/und ein Cer-Oxid umfaßt. Dadurch kann die Abgasreinigungsanordnung auch gleichzeitig als Katalysator verwendet werden, um von der Verbrennungskraftmaschine im Betrieb abgegebene Schadstoffe HC, CO, und $NO_x$ unter Verwendung von geeigneten Katalysatormaterialien in die unschädlichen Stoffe $H_2O$, $CO_2$, und $N_2$ umzuwandeln. Dabei wird sich auf oder/und in den porösen Materialschichten ablagernder Ruß unter katalytischer Wirkung des Katalysatormaterials verbrannt. Die Verwendung der Abgasreinigungsanordnung ist in Verbindung mit der katalytischen Beschichtung besonders vorteilhaft, d.h. eine Regeneration der Abgasreinigungsanordnung ist wegen der gleichmäßigen Durchströmung der Abgasreinigungsanordnung aufgrund der konvexen und konkaven Oberflächenbereiche besonders effektiv. Größere Rußablagerungen entstehen aufgrund der besonderen Durchströmung nicht, das katalytische Material kann wirkungsvoll die Schadstoffe umwandeln.

In noch weiterer Ausgestaltung der Erfindung ist der Stapel an seiner Aussenseite in einem Bereich zwischen der Eintrittsseite und der Austrittsseite von wenigstens einer Matte aus dem Fasermaterial oder/und wenigstens einer Faservliesschicht begrenzt.

Bevorzugterweise umgibt die Fasermaterialmatte den Stapel in dem Bereich zwischen der Eintrittsseite und der Austrittsseite vollständig.

Unter einem weiteren Aspekt umfasst die vorliegende Erfindung ein Verfahren zum Herstellen einer Abgasreinigungsanordnung zur Reinigung eines Abgases einer Verbrennungskraftmaschine, wobei das Verfahren die folgenden Schritte umfaßt: Bereitstellen eines Materialbands; Formen des Materialbands mit Hilfe von Prägewalzen zu einem gewellten Materialband, wobei in dem Materialband entlang von im wesentlichen geradlinig sich erstreckenden Linien abwechselnd Wellenberge und Wellentäler gebildet werden, und wobei die Wellenberge und/oder Wellentäler in Abschnitten in Erstreckungsrichtung des gewellten Materialbandes mit Deformationsbereichen ausgebildet werden, wobei die Deformationsbereiche in wenigstens einem Materialbandabschnitt wenigstens bereichsweise mit einem geringeren Abstand von einer Hauptebene des gewellten Materialbandes angeordnet sind als entlang der Linien zwischen benachbarten Deformationsbereichen, so daß nach Falten des Materialbandes an quer zu einer Erstreckungsrichtung des Materialbandes sich erstreckenden Faltlinien, welche mit einem Abstand in Erstreckungsrichtung des Materialbandes voneinander angeordnet sind, und nach Legen des gefalteten Materialbandes in Abschnitten derart übereinander, daß ein Stapel gebildet wird, zwei im Stapel einander benachbarte Materialbandabschnitte an den Deformationsbereichen aneinander anliegen; Einbauen des Stapels in ein Gehäuse, welches eine Eintrittsöffnung für das Abgas und eine der Eintrittsöffnung gegenüberliegende Austrittsöffnung für gereinigtes Abgas aufweist. So wird in einfacher Weise ein Partikelfilterstapel gebildet, und zwar ohne daß einzelne Materialbandabschnitte geschnitten werden müssen, wodurch die Herstellung besonders vorteilhaft ist.

In bevorzugter Ausführungsform der Erfindung ist ein Werkstoff des Materialbands ein für das zu reinigende Abgas permeabler poröser Werkstoff. Dabei wird der Stapel in dem Gehäuse derart orientiert, daß die Faltlinien an dem Stapel zu der Eintrittsöffnung und zu der Austrittsöffnung hinweisend angeordnet sind, und daß der Stapel gegenüber dem Gehäuse derart abgedichtet wird, daß im wesentlichen jeder mögliche Weg des Abgases von der Eintrittsöffnung zu der Austrittsöffnung das Materialband wenigstens ein Mal durchsetzt.

In einer weiteren bevorzugten Ausführungsform der Erfindung wird das Materialband beim Falten zwischen zwei Prägewalzen zum Einbringen von Verformungsbereichen entlang der Faltlinien hindurchgeführt. Die Verformungsbereiche erleichtern in besonderer Weise das Falten der Schicht.

Vorzugsweise werden die Verformungsbereiche durch Eindrücken des Materialbandes in eine an einer ersten der beiden Walzen vorgesehene wenigstens eine Längsausnehmung mittels eines an einer zweiten der beiden Walzen vorgesehenen entsprechenden wenigstens einen Längswulstes eingebracht.

Weiterhin wird bevorzugt, daß die wenigstens eine Längsausnehmung sich parallel zu einer Achse der ersten Walze erstreckt und der wenigstens eine Wulst sich parallel zu einer Achse der zweiten Walze erstreckt.

In bevorzugter Ausgestaltung sind zum Wellen des Materialbandes an einer Oberfläche der ersten und der zweiten Walze in Umfangsrichtung der Walze benachbarte Wulste und Ausnehmungen vorgesehen, welche sich spiralförmig um die Achsen der Walzen erstrekken.

Weiterhin wird bevorzugt, daß an der ersten und der zweiten Walze jeweils eine gerade Anzahl von Umfangsbereichen vorgesehen ist, welche jeweils in Umfangsrichtung einerseits durch einen Längswulst und andererseits durch eine Längsausnehmung begrenzt sind, und wobei Orientierungen der spiralförmigen Wulste und Ausnehmungen in einander in Umfangsrichtung benachbarten Umfangsbereichen einander entgegengesetzt sind.

Es wird weiterhin bevorzugt, daß zwischen dem Gehäuse und dem Stapel eine Matte aus einem Drahtgestrickmaterial oder/und Drahtvliesmaterial oder/und einem Keramikmaterial oder/und einem keramischen Fasermaterial eingefügt wird. Wie oben schon erwähnt, wird durch diese Anordnung neben der seitlichen Abdichtung der Abgasströmungskanäle durch die Fasermaterialmatte die Abgasreinigungsanordnung auch gleichzeitig in einfacher Weise durch Verklemmen der Abgasreinigungsanordnung mit der Fasermaterialmatte in dem Gehäuse gehaltert, ohne daß eine fügende Verbindung erforderlich ist.

Nachfolgend werden Ausführungsformen der Erfindung anhand von Zeichnungen näher erläutert. Hierbei zeigt bzw. zeigen:

Figur 1　　　　eine schematische Darstellung einer ersten Ausführungsform einer erfindungsgemäßen Abgasreinigungsanordnung im Abgasstrang eines Kraftfahrzeugs;

Figur 2　　　　eine Querschnittsansicht einer Abgasreinigungsanordnung gemäß der ersten Ausführungsform der Erfindung;

Figur 3　　　　eine perspektivische Ansicht der ersten Ausführungsform der Abgasreinigungsanordnung;

Figur 3a　　　eine perspektivische Teilansicht der ersten Ausführungsform gemäß Figur 3 bei Durchströmung mit einem Abgas;

Figuren 4 bis 5　perspektivische Ansichten weiterer Ausführungsformen der Abgasreinigungsanordnung;

Figur 6　　　　eine Detailansicht der in Figur 2 dargestellten Ausführungsform;

Figur 7　　　　eine Querschnittsansicht einer Abgasreinigungsanordnung gemäß einer weiteren Ausführungsform der Erfindung;

Figur 8　　　　ein Verfahren zur Herstellung einer Abgasreinigungsanordnung;

Figur 9　　　　eine perspektivische Ansicht einer weiteren Ausführungsform der Abgasreinigungsanordnung.

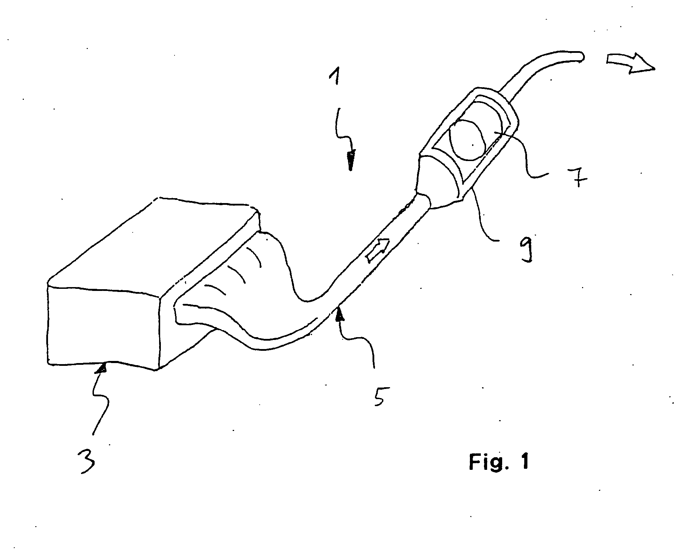

In Figur 1 ist ein Abgasreinigungssystem 1 schematisch dargestellt, wie es typischerweise zum Beispiel in Personenkraftwagen verwendet wird. Dieses Abgasreinigungssystem 1 dient zur Behandlung von Abgasen einer symbolisch dargestellten Verbrennungskraftmaschine 3, wobei das von der Verbrennungskraftmaschine 3 produzierte Abgas über einen Abgasstrang 5 an die Umgebung abgegeben wird, und wobei der Abgasstrang 5 eine Abgasreinigungsanordnung bzw. einen Partikelfilter 7 umfasst, welcher in einem von dem Abgas durchströmten Gehäuse 9 angeordnet ist. Für die in dieser Erfindung behandelten Partikelfilter sind insbesondere mit Dieselkraftstoff betriebene Verbrennungskraftmaschinen besonders geeignet.

In Strömungsrichtung des Abgases gesehen kann vor oder auch hinter dem Partikelfilter 7 ein Katalysator (hier nicht dargestellt), vorzugsweise ein Oxidationskatalysator, in demselben Gehäuse 9 zur Vor- bzw. Nachbehandlung des Abgases angeordnet sein. Durch den Katalysator werden bei Temperaturen oberhalb von etwa 150 °C bis 200 °C die Kohlenwasserstoffe sowie Kohlenmonoxid oxidiert. Aufgabe des Partikelfilters ist es dann, in dem Abgas verbleibende Abgaspartikel durch den Partikelfilter 7 zurückzuhalten.

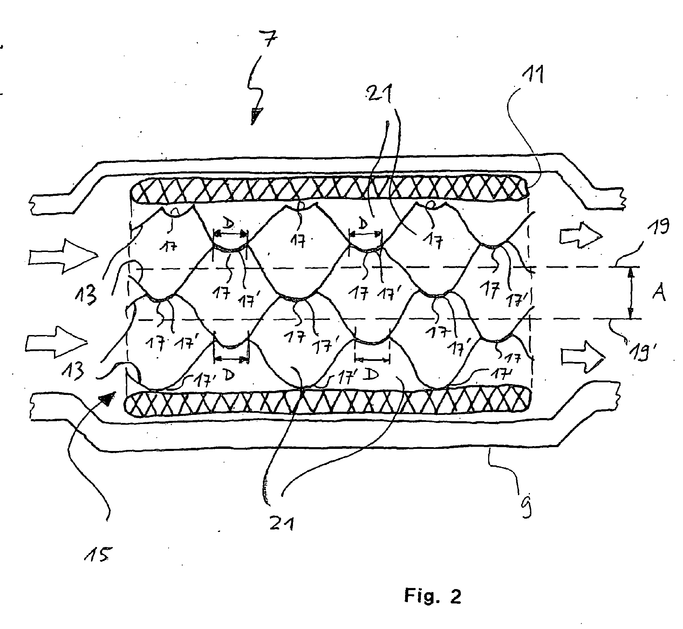

Figur 2 stellt eine Querschnittsansicht des in Figur 1 schematisch dargestellten Partikelfilters 7 dar. Der Partikelfilter 7 ist in dem Gehäuse 9 eingebaut dargestellt, wobei der Partikelfilter 7 mit einer Fasermatte 11 gegen Verrutschen fixiert, d.h. gegen das Gehäuse 9 verklemmt ist, und zum Schutz gegen Vibrationen umgeben ist.

Wie in Figur 2 durch Pfeile dargestellt ist, strömt das zu reinigende Abgas in der Zeichnung vom linken Bildrand in den Partikelfilter 7. Eine Erläuterung der Abgasreinigungswirkung findet weiter unten statt.

Der Partikelfilter 7 ist aus mehreren gewellten Platten 13 zu einem Stapel 15 zusammengesetzt, wobei die Wellung jeder Platte 13 im Querschnitt betrachtet einen quasi sinusförmigen Verlauf mit Wellenbergen und Wellentälern aufweist.

Die Spitzen der Wellenberge jeder gewellten Platte sind eingedellt, wodurch sich in den Eindellungen vergrößerte Kontaktflächen 17 ergeben. Die gewellten Platten 13 sind nun derart übereinander angeordnet, daß die Wellentäler, welche ebenfalls Kontaktflächen 17' aufweisen, mit ihren Kontaktflächen 17' auf den Kontaktflächen 17 in den Eindellungen der Wellenberge zum Liegen kommen.

Wie in Figur 2 dargestellt ist, ist eine maximale Ausdehnung der Kontaktflächen 17,17' D. Ein Abstand zwischen zwei unmittelbar benachbarten Platten 13, d.h. ein Abstand zwischen Hauptebenen 19, 19' (als gestrichelte Linien dargestellt) ist A. Die Hauptebenen 19, 19' verlaufen im wesentlichen mittig durch den Querschnitt jeder Platte 13. Die Dimensionierung von D und A ist im in Figur 2 dargestellten Beispiel so gewählt, daß ein Verhältnis D/A etwa 0,7 beträgt. Dadurch wird eine besonders stabile Anordnung des Stapels 15 erzielt, d.h. die Platten 13 können nicht in Plattenerstreckungsrichtung gegeneinander verschoben werden (z.B. bei Abgaspulsationen), da die Platten 13 an den Kontaktflächen 17,17' miteinander in Eingriff stehen. Dieser Effekt wird noch verstärkt durch Umgeben des Stapels 15 mit der Fasermatte 11 und Verklemmen des Stapels 15 im Gehäuse 9. Für das Verhältnis von D/A sind aber auch andere Kombinationen von D und A denkbar.

Zwei unmittelbar benachbarte Platten 13 begrenzen Abgasströmungskanäle 21. D.h. das Abgas strömt entlang dieser Kanäle 21, und wird insbesondere durch die gewellte Struktur der Platten 13 zu ständigen (sozusagen korkenzieherartigen) Richtungsänderungen gezwungen, wobei das Abgas mit Wänden der gewellten Platten in Berührung kommt.

Eine Reinigung des Abgases wird nun auf folgende Weise erzielt:

In dem in Figur 2 dargestellten Beispiel sind die Platten 13 aus einem dünnen Metallblech hergestellt, welches mit einem Katalysatormaterial (hier nicht dargestellt) beschichtet ist. Dieses Katalysatormaterial kann ein oder mehrere Edelmetalle, Oxide unedler Metalle oder/und Mischoxide, als Kombination mehrerer Oxide, oder Kombinationen dieser drei Stoffgruppen umfassen.

Das Katalysatormaterial wandelt die von der Verbrennungskraftmaschine im Betrieb abgegebenen Schadstoffe HC und CO (das Abgas) unter Verwendung eben dieses Katalysatormaterials in die unschädlichen Stoffe $H_2O$ und $CO_2$ um, wenn die Schadstoffe bei Durchströmung der Abgasströmungskanäle mit den Wänden der gewellten Platten in Berührung kommt. Zudem wird die Reaktion von NO zu $NO_2$ unterstützt, wobei $NO_2$ eine Oxidation von Kohlenstoff bzw. Ruß bereits bei niedrigen Temperaturen unterstützt. Für eine genaue Beschreibung dieses sogenannten CRT-Prinzips (CRT = Continuously Regenerating Trap, sich kontinuierlich regenerierender Filter) wird auf das Europäische Patent EP 0 835 684 A2 verwiesen.

Aufgrund der Ausbildung der Platten 13 in gewellter Form und der besonderen Anordnung der gewellten Platten 13 zueinander (d.h. aufgrund des Miteinander-in-Verbindung-Stehens durch die Kontaktflächen 17,17') ist die Abgasströmung charakterisiert durch, wie oben bereits erwähnt, ständige Richtungswechsel. Daraus folgt zum einen eine schnelle Verwirbelung und homogene Ausdehnung des Abgases im Partikelfilter 7, wodurch sich (bei angetriebener Verbrennungskraftmaschine) eine homogene Betriebstemperatur des Partikelfilters 7 ergibt und somit homogene bzw. konstante Temperaturbedingungen für die Abgasreinigung und Regeneration des Partikelfilters 7.

Nachfolgend werden Varianten des anhand der Figur 2 erläuterten Partikelfilters beschrieben. Hierin sind Komponenten, die den Komponenten der Figur 2 hinsichtlich ihres Aufbaus und ihrer Funktion entsprechen, mit den Bezugsziffern der Figur 2 versehen, denen zur Unterscheidung jedoch ein zusätzlicher Buchstabe hinzugefügt ist. Es wird auf die gesamte vorangehende Beschreibung Bezug genommen.

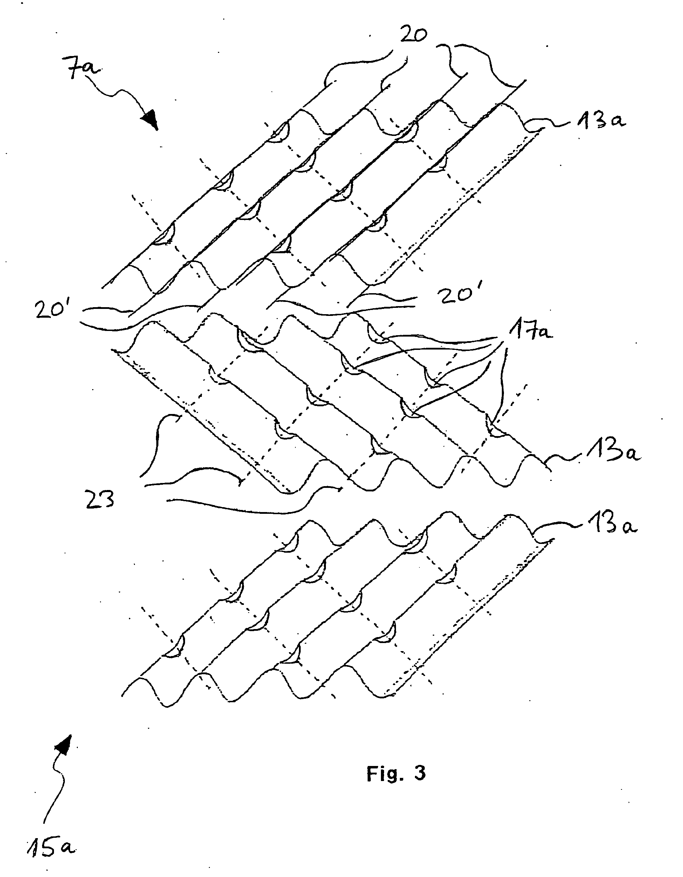

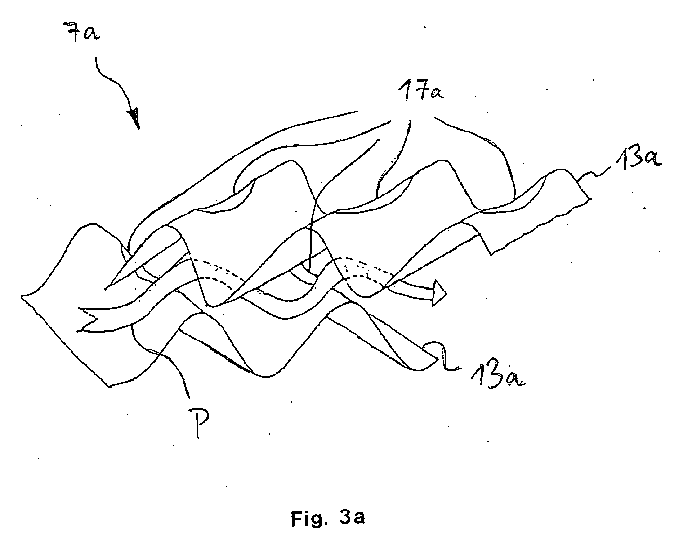

Figur 3 zeigt eine weitere Abgasreinigungsanordnung in einer perspektivischen Explosionsdarstellung eines aus gewellten Platten 13a aufgebauten Partikelfilters 7a. Dabei ist die Wellung der Platten 13a in Form von Wellenbergen und Wellentälern ausgebildet, welche, im Gegensatz zu den in Figur 2 dargestellten Wellenbergen und Wellentälern, entlang von geradlinig sich erstreckenden Linien 20 bzw. 20' angeordnet sind.

Der Vorteil geradlinig sich erstreckender Wellenberge und Wellentäler ist eine erhöhte Stabilität der gewellten Platten 13a in sich und somit eine erhöhte Stabilität eines aus gewellten Platten 13a zusammengesetzten Stapels 15a.

In Figur 3 sind Kontaktflächen 17a zu erkennen, welche sozusagen Eindellungen in regelmäßigen Abständen auf den Wellenkämmen der Wellenberge entlang der Linien 20 sind. Die gestrichelten Linien 23 deuten den Verlauf der Wellentäler der jeweils unmittelbar darüberliegenden Platte 13a an, wenn die Platten 13a aufeinandergestapelt sind.

Auch hier bestehen die Platten 13a aus dünnem porösem Material mit einer Katalysatormaterialbeschichtung.

Figur 3a zeigt einen Ausschnitt des in Figur 3 dargestellten Partikelfilters 7a mit aus porösem Material gebildeten Platten 13a mit Kontaktflächen 17a.

In Figur 3a ist durch einen Pfeil P ein Verlauf der Abgasströmung dargestellt wie er sich für eine Abgasreinigungsanordnung nach Figur 3 ergibt. Dabei ist zu erkennen, daß das Abgas in einer korkenzieherartigen Bewegung zwischen den Platten 13a, 13a strömt, wobei das Abgas die Oberflächen der Platten 13a, 13a überströmt und dabei die Partikel sich auf den Plattenwänden ablagern.

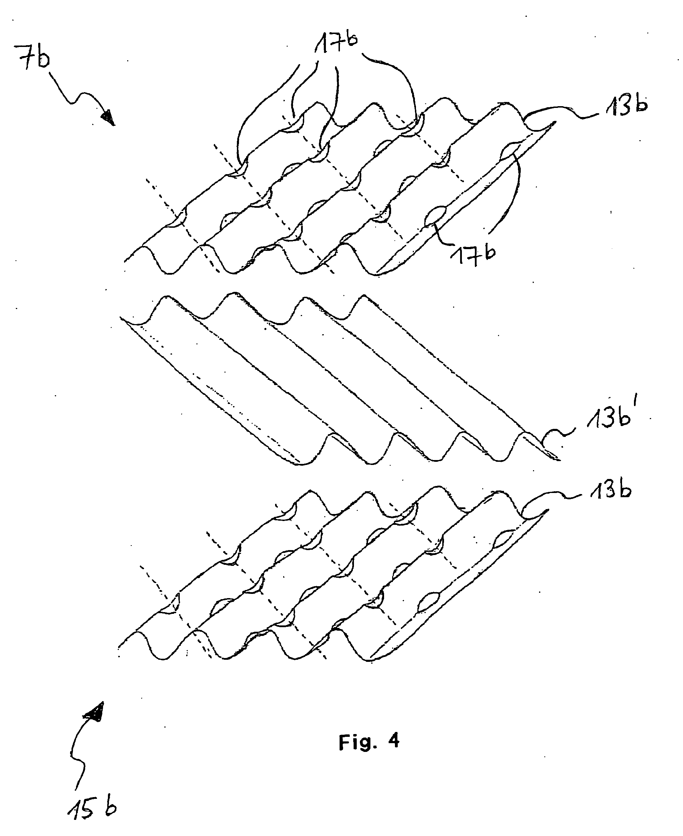

Figur 4 zeigt eine weitere Abgasreinigungsanordnung in einer perspektivischen Explosionsdarstellung eines zu einem Stapel 15b aus gewellten Platten 13b, 13b' aufgebauten Partikelfilters 7b.

Der Unterschied zu der in Figur 3 dargestellten Abgasreinigungsanordnung besteht zum einen darin, daß die gewellten Platten 13b Kontaktflächen 17b als Eindellungen sowohl in den Wellenbergen als auch in den Wellentälern aufweisen. Zwischen jeweils zwei Platten 13b sind nun Platten 13b' angeordnet, welche keine Eindellungen aufweisen, so daß Wellenberge und Wellentäler der Platte 13b' in den Eindellungen der unmittelbar benachbarten Platten 13b, 13b zu liegen kommen.

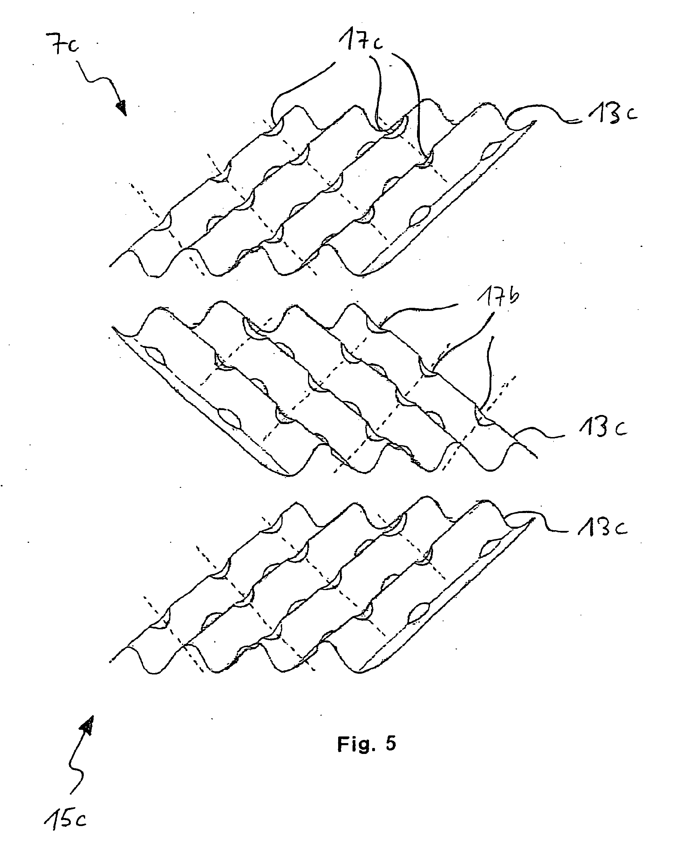

Figur 5 zeigt eine weitere Abgasreinigungsanordnung in einer perspektivischen Explosionsdarstellung eines aus gewellten Platten 13c zu einem Stapel 15c aufgebauten Partikelfilters 7c. Hierbei weist jede gewellte Platte 13c, 13c, 13c Kontaktflächen 17c als Eindellungen in Wellenbergen und Wellentälern der gewellten Platten 13c,13c,13c auf, so daß jeweils Kontaktflächen in Wellentälern einer Platte mit Kontaktflächen in Wellenbergen einer anderen unmittelbar darunter angeordneten Platte in Eingriff stehen. Dadurch wird eine besonders stabile Anordnung der gewellten Platten 13c erreicht.

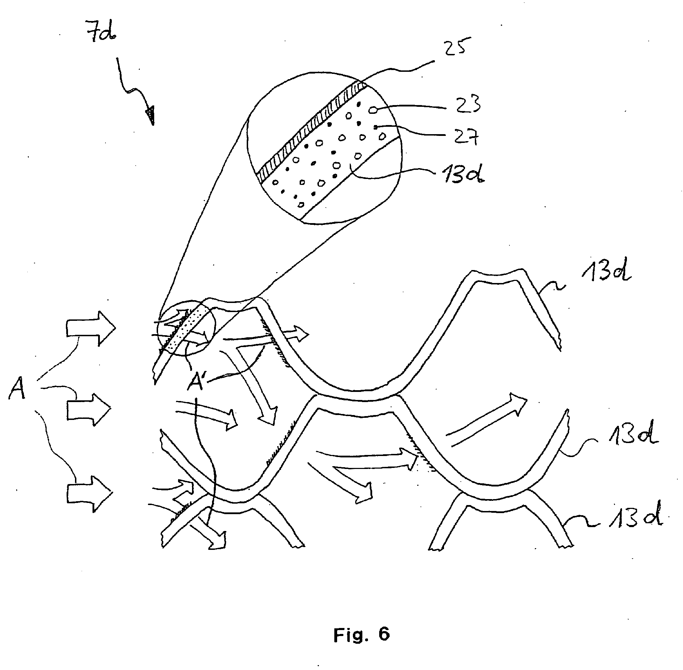

Figur 6 zeigt eine weitere Abgasreinigungsanordnung in einer Ausschnittsansicht eines Partikelfilters 7d mit einer Detailansicht einer Platte 13d, wobei der Partikelfilter 7d dem in Figur 2 dargestellten Partikelfilter 7 bezüglich der gewellten Struktur ähnlich ist. Der Unterschied besteht jedoch darin, daß die Platten 13d aus einem für das zu reinigende Abgas porösen Werkstoff hergestellt sind, wobei der poröse Werkstoff mit einem Katalysatormaterial beschichtet ist.

In Figur 6 wird gezeigt, wie das Abgas vom linken Bildrand her (dargestellt durch drei Pfeile A) in den Partikelfilter 7d eintritt. Das Abgas strömt dann in der weiter oben beschriebenen korkenzieherartigen Weise entlang der Strömungskanäle, wobei das Abgas mit den Plattenwänden in Berührung kommt. Das Abgas strömt aber auch durch die Platten 13d hindurch (dargestellt durch Pfeile A'), da die Platten 13d aus einem für das Abgas porösen Werkstoff gebildet sind, und da auf der dem Abgas zugewandten Plattenseite ein Überdruck und auf der dem Abgas abgewandten Seite ein Unterdruck entsteht, so daß dieses Druckgefälle das Abgas durch die porösen Plattenwände hindurchströmen läßt.

Eine Umwandlung von CO, HC und $NO_x$ in $CO_2$, $H_2O$ und $N_2$ findet sowohl beim Überströmen der Platten 13d als auch beim Durchströmen der Platten 13d bei Kontakt mit der katalytischen Substanz statt, welche in der Detailansicht in Figur 6 als eine Vielzahl von sogenannten aktiven Zentren 23 dargestellt ist.

Aufgrund der Porösität des Werkstoffes bilden sich beim Überströmen des Abgases über die Oberflächen der Platten 13d Mikrowirbel. Das hat zur Folge, daß das Abgas längere Zeit an einer Stelle verweilt, und somit eine höhere Wahrscheinlichkeit besteht, daß das Abgas mit aktiven Zentren 23 der katalytischen Beschichtung in Kontakt kommt.

Die Abgasreinigungswirkung des Partikelfilters 7d ergibt sich auch aufgrund der Durchströmung des Abgases durch die porösen Platten, wobei die Wechselwirkung zwischen der in dem porösen Werkstoff angeordneten katalytischen Beschichtung und Rußpartikeln 27 in der bereits oben erwähnten Europäischen Patentschrift EP 0 835 684 A2 beschrieben ist. Das gleiche gilt auch für eine bereits auf der Platte 13d abgelagerte Partikelschicht 25.

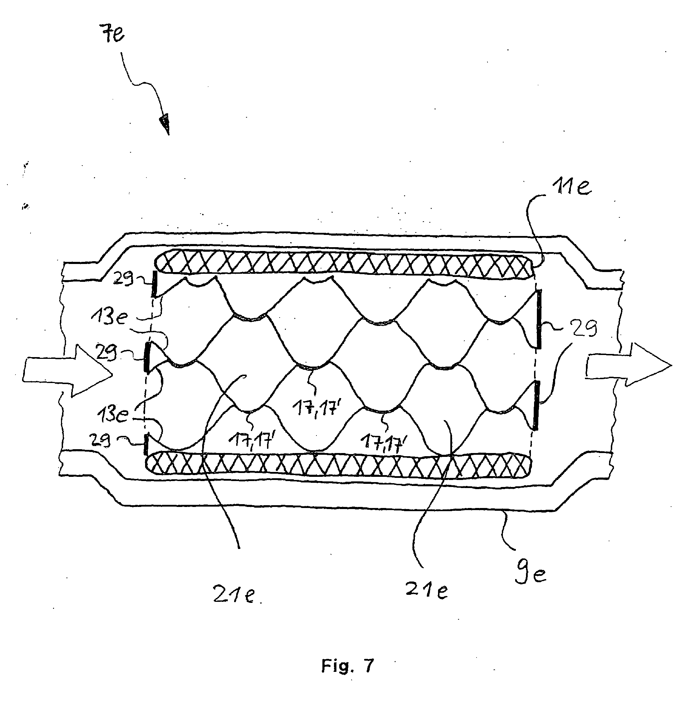

Figur 7 zeigt eine weitere Abgasreinigungsanordnung in einer Querschnittsansicht eines Partikelfilters 7e. Der Partikelfilter 7e ist wieder in einem Gehäuse 9e eingebaut dargestellt, wobei der Partikelfilter 7e mit einer Fasermatte 11e gegen Verrutschen fixiert und zum Schutz gegen Vibrationen umgeben ist.

Der Partikelfilter 7e ist wie der in Figur 2 dargestellte Partikelfilter 7 aus gewellten Platten 13e aufgebaut, welche jeweils eine Vielzahl von Kontaktflächen 17e, 17e' aufweisen. Der Unterschied zu dem in Figur 2 dargestellten Partikelfilter 7 besteht jedoch darin, daß Abgasströmungskanäle 21e, die an der Eintrittsseite offen und an der Austrittsseite geschlossen sind, in Stapelrichtung abwechselnd mit Abgasströmungskanälen 21e, die an der Eintrittsseite geschlossen und an der Austrittsseite offen sind, angeordnet sind.

Die Abgasströmungskanäle 21e sind an der Eintritts- bzw. Austrittsseite jeweils durch Stege 29 verschlossen, wobei die Stege 29 aus einem Werkstoff hergestellt sind, welcher für das Abgas nicht durchdringbar ist. Es ist aber auch denkbar, daß die Abgasströmungskanäle auf andere Weise verschlossen werden können, wie z.B. Verkleben, Verschweißen oder Falzen unmittelbar benachbarter Platten 13e an ihren Eintritts- bzw. Austrittsseiten.

Das Verschließen der Abgasströmungskanäle an den Eintritts- bzw. Austrittsseiten hat den Vorteil, daß das Abgas zu einem Durchtritt durch die aus einem für das Abgas porösen Material hergestellten Platten 13e gezwungen wird, wodurch die Partikelfilterwirkung erzielt wird.

Die Platten 13e sind hier aus einem gesinterten metallischen Vliesmaterial mit einem Faserdurchmesser von etwa 10 $\mu$m gebildet. Jedoch kann der Faserdurchmesser, die Porösität und die Dicke des Werkstoffs an die zu filternden Partikel angepasst werden. Es muss beachtet werden, daß größere Faserdurchmesser auch größere Abstände zwischen den Fasern bedingen und damit den Abscheidegrad verschlechtern. Durch besonders feine Strukturen kann dabei die Filterung im oberflächennahen Bereich erzielt werden, während "offenere" Strukturen zu einer Filterung über eine größere Tiefe des Materials führen.

Es ist auch möglich, unterschiedliche Lagen von Fasermaterial mit unterschiedlicher Fasergröße aufeinander anzuordnen. Wenn zum Beispiel in Filtrationsrichtung zuerst eine gröbere Struktur und dahinter eine feinere Struktur angeordnet, so kann in der gröberen Struktur eine Tiefenfiltration erzielt werden, während die dahinter angeordnete feinere Struktur selbst feinste Partikel herausfiltert. Ein weiterer Vorteil einer zusätzlichen Lage aus Fasermaterial ist die Erhöhung der Stabilität der Platten und damit des gesamten Partikelfilters. Es sind allerdings auch andere Werkstoffe für die Platten denkbar, wie zum Beispiel Keramiken, Pulvermaterialien oder Schäume. Jedoch muss beachtet werden, daß die Werkstoffe für das Abgas permeabel sind.

Außerdem ist denkbar, daß die porösen Platten, wie im Fall der aus Metallblech gebildeten Platten, zur Erzielung einer besonders effektiven Abgasreinigung mit einem Katalysatormaterial beschichtet sind. Zur Wechselwirkung des Katalysatormaterials mit dem Abgas sei auf das bereits oben Gesagte bzw. auf das Europäische Patent EP 0 835 684 A2 verwiesen.

Ein Verblocken des Partikelfilters 7e wird also dadurch vermieden, daß aufgrund der wie bereits weiter oben beschriebenen besonderen Struktur und Anordnung der gewellten Platten 13e eine homogene Durchströmung des Partikelfilters 7e erzielt wird, so daß ständig eine gleichmäßige Regeneration des Partikelfilters 7e stattfindet.

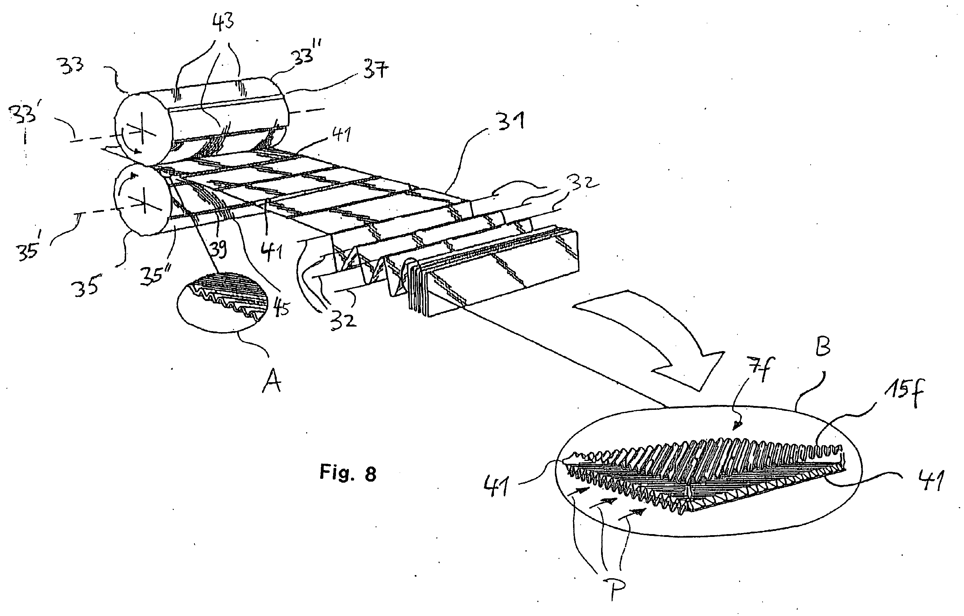

Figur 8 zeigt nun ein Verfahren zur Herstellung einer Abgasreinigungsanordnung zur Reinigung eines Abgases einer Verbrennungskraftmaschine.

In einem ersten Schritt wird ein Materialband 31 durch zwei Prägewalzen 33,35 hindurchgeführt.

Die zwei Prägewalzen 33,35 sind jeweils um eine Achse 33',35' rotierbar, wobei die Achsen 33',35' parallel zueinander angeordnet sind.

Zum einen weist die Prägewalze 33 auf ihrer Mantelfläche 33" eine parallel zur Prägewalzenachse 33' angeordnete Längswulst 37 auf, und die Prägewalze 35 weist auf ihrer Mantelfläche 35" eine parallel zur Prägewalzenachse 35' angeordnete Längsausnehmung 39 auf. Bei Rotation der beiden Prägewalzen 33,35 in gegensinniger Richtung (angedeutet durch Pfeile auf den Stirnflächen der Walzen) mit dazwischen angeordnetem Materialband 31 drückt die Längswulst 37 das Materialband 31 an gedachten Faltlinien 32 auf dem Materialband 31 in die Längsausnehmung 39, um so in dem Materialband 31 Verformungsbereiche 41 zu bilden, an welchen das Materialband 31 in einem zweiten Schritt hin- und hergefaltet wird, so daß ein Materialbandstapel 15f gebildet wird.

Zum anderen weist die Prägewalze 33 auf ihrer Mantelfläche 33" in Umfangsrichtung der Prägewalze 33 benachbarte Wulste umfassende Umfangsbereiche 43 auf (hier nur teilweise dargestellt), und die Prägewalze 35 weist auf ihrer Mantelfläche 35" in Umfangsrichtung der Prägewalze 35 benachbarte Ausnehmungen umfassende Umfangsbereiche 45 auf (hier auch nur teilweise dargestellt), wobei sich die Wulste in den Umfangsbereichen 43 und die Ausnehmungen in den Umfangsbereichen 45 derartig spiralförmig um die Achsen 33',35' erstrecken, daß bei Rotation der beiden Prägewalzen 33,35 die Wulste in den Umfangsbereichen 43 das Materialband 31 in die Ausnehmungen in den Umfangsbereichen 45 drücken. Dadurch wird, wie in der Ausschnittvergrößerung A dargestellt ist, das Materialband 31 zu einem gewellten Materialband 31 geformt. Die Wulste in den Umfangsbereichen 43 und die Ausnehmungen in den Umfangsbereichen 45 sind derart ausgebildet, daß in wenigstens einem Materialbandabschnitt wenigstens bereichsweise Deformationsbereiche (in Figur 8 nicht dargestellt) mit einem geringeren Abstand von einer Hauptebene des gewellten Materialbandes 31 angeordnet sind als entlang der Linien zwischen benachbarter Deformationsbereiche, so daß nach Falten des Materialbandes 31 an den quer zu einer Erstreckungsrichtung des Materialbandes 31 sich erstreckenden Faltlinien 32, welche mit einem Abstand in Erstreckungsrichtung des Materialbandes 31 voneinander angeordnet sind, und nach Legen des gefalteten Materialbandes 31 in Abschnitten derart übereinander, daß der Stapel 15f (siehe Detailausschnitt B) gebildet wird, zwei im Stapel 15f einander benachbarte Materialbandabschnitte an den Deformationsbereichen aneinander anliegen.

In der Detailansicht des Materialbandstapels 15f in der Ausschnittvergrößerung B ist zu beachten, daß der betrachtete Materialbandstapelabschnitt um 90° "gekippt" ist, so daß die betrachteten Materialbandabschnitte horizontal zum Liegen kommen. Wie auch in der Detailansicht B der Figur 8 angedeutet ist, wird der auf obige Weise hergestellte Partikelfilter 7f in der mit Pfeilen P dargestellten Richtung durchströmt.

Als letzter Schritt wird der Materialbandstapel 15f bzw. Partikelfilter 7f in einem Gehäuse, wie z.B. dem in Figur 2 dargestellten Gehäuse 9, welches mit einer Abgas-Eintritts- und einer Abgas-Austrittsöffnung ausgebildet ist (dargestellt durch die Pfeile in Figur 2), derart angeordnet, daß der Partikelfilter 7f in der in Figur 8 in der Detailansicht B dargestellten Weise vom Abgas (Pfeile P) durchströmt wird. Eine seitliche Abdichtung des Partikelfilters 7f zum Gehäuse hin erfolgt durch geeignete den Partikelfilter umgebende Fasermatten.

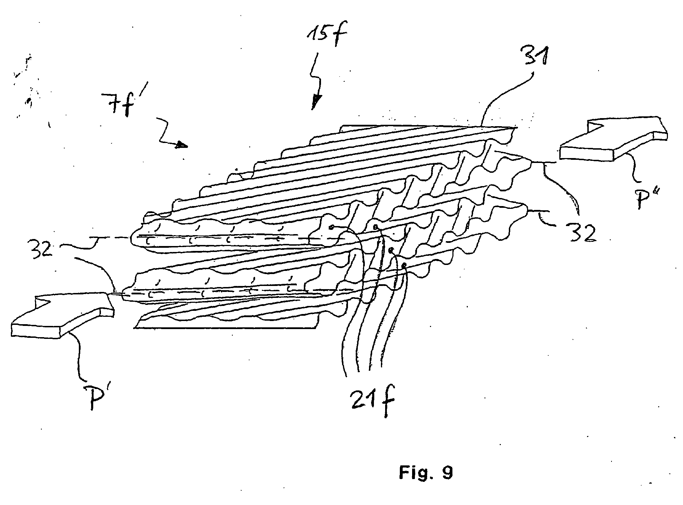

Figur 9 zeigt eine perspektivische Ansicht des Partikelfilters 7f', welcher nach dem oben beschriebenen erfindungsgemäßen Verfahren hergestellt worden ist. Dabei entspricht der in Figur 9 dargestellte Partikelfilter 7f' in der Herstellung dem in der Detailansicht B in Figur 8 dargestellten Partikelfilter 7f, jedoch mit dem Unterschied, daß ein Werkstoff des Partikelfilters 7f' ein für das zu reinigende Abgas permeabler poröser Werkstoff ist.

Zunächst wird gemäß dem Verfahren, wie oben bereits erläutert worden ist, das Materialband 31 aus dem für das Abgas permeablen porösen Werkstoff an den quer zur Erstreckungsrichtung des Materialbandes 31 sich erstreckenden gedachten Faltlinien 32 hin- und hergefaltet.

Sodann wird das derart gefaltete Materialband 31 in Abschnitten übereinander gelegt, so daß der Stapel 15f gebildet wird. Durch das Übereinanderlegen werden Abgasströmungskanäle 21f gebildet. Wie in der in Figur 7 dargestellten Abgasreinigungsanordnung sind diese Abgasströmüngskanäle 21f abwechselnd an der Abgas-Eintrittsseite (gekennzeichnet durch Pfeil P' am linken Bildrand) geschlossen und an der Abgas-Austrittsseite (gekennzeichnet durch Pfeil P" am rechten Bildrand) offen bzw. an der Abgas-Eintrittsseite offen und an der Abgas-Austrittsseite geschlossen. Das in den Partikelfilter 7f' in Richtung des Pfeiles P' einströmende Abgas wird zu Durchtritten durch das poröse Materialband 31 gezwungen, wie auch bei dem in Figur 7 dargestellten Partikelfilter. In dem in Figur 9 dargestellten Beispiel ist ein Werkstoff des Materialbandes 31 mit einem Katalysatormaterial beschichtet, so daß das zu dem in Figur 7 bereits Gesagte gilt.

Zusammenfassend wird eine Abgasreinigungsanordnung vorgeschlagen, welche eine Mehrzahl von Platten mit jeweils einer Vielzahl von in einander entgegengesetzte Richtungen gekrümmten Oberflächenbereichen umfasst, wobei die Mehrzahl von Platten jeweils eine Vielzahl von Kontaktflächen aufweisen, an denen benachbarte Platten aneinander anliegen, und wobei durch benachbarte Platten Abgasströmungskanäle begrenzt sind, und wobei für wenigstens 50 % der Kontaktflächen der beiden Platten gilt: D/A > 0,05, insbesondere > 0,07, weiter bevorzugt > 0,10; wobei D eine maximale Ausdehnung der Kontaktflächen in der Plattenebene und A ein Abstand zwischen Hauptebenen der beiden Platten ist. Es wird außerdem ein Verfahren zum Herstellen einer Abgasreinigungsanordnung vorgeschlagen, umfassend: Bereitstellen eines Materialbands; Formen des Materialbands; Falten des Materialbandes an Faltlinien; Legen des gefalteten Materialbandes in Abschnitten zu einem Stapel; und Einbauen des Stapels in ein Gehäuse.

**Patentansprüche**

1. Abgasreinigungsanordnung zur Reinigung eines Abgases einer Verbrennungskraftmaschine, umfassend:

   eine Mehrzahl von Platten (13), welche jeweils nebeneinander eine Vielzahl von Oberflächenbereichen aufweisen, welche abwechselnd in einander entgegengesetzte Richtungen gekrümmt sind,

   wobei die Mehrzahl von Platten (13) zu einem Stapel (15) übereinandergefügt ist, wobei zwei im Stapel (15) einander benachbarte Platten (13,13) jeweils eine Vielzahl von Kontaktflächen (17,17') aufweisen, an denen die beiden Platten (13,13) aneinander anliegen, und wobei zwischen in einer Plattenebene einander benachbarten Anlagebereichen die beiden Platten (13,13) einen Abstand voneinander aufweisen, so daß durch die beiden Platten (13,13) Abgasströmungskanäle (21) begrenzt sind, und wobei für wenigstens 50 % der Kontaktflächen (17,17') der beiden Platten (13,13) gilt:

$$\frac{D}{A} > 0{,}05 \; ;$$

   wobei

   D eine maximale Ausdehnung der Kontaktflächen (17, 17') in der Plattenebene ist; und
   A ein Abstand zwischen Hauptebenen der beiden Platten (13,13) ist.

2. Abgasreinigungsanordnung nach Anspruch 1, wobei wenigstens eine der zwei einander benachbarten Platten (13,13) eine gewellte Plattenstruktur aufweist, so daß entlang von im wesentlichen geradlinig sich erstrekkenden Linien abwechselnd Wellenberge und Wellentäler gebildet sind.

3. Abgasreinigungsanordnung nach Anspruch 2, wobei die Kontaktflächen (17,17') der wenigstens einen Platte (13) wenigstens in einem Bereich mit einem geringeren Abstand von der Hauptebene angeordnet sind als außerhalb dieses Bereichs entlang der Linien, entlang welcher die Wellenberge bzw. Wellentäler gebildet sind.

4. Abgasreinigungsanordnung nach Anspruch 2 oder 3, wobei die Wellenberge und die Wellentäler der jeweils zwei im Stapel (15) benachbarten Platten (13,13) unter einem Winkel von mehr als 10° zueinander orientiert sind.

5. Abgasreinigungsanordnung nach einem der Ansprüche 1 bis 4, wobei Abgasströmungskanäle (21), die an der Eintrittsseite offen und an der Austrittsseite geschlossen sind, in Stapelrichtung abwechselnd mit Abgasströmungskanälen (21), die an der Eintrittsseite geschlossen und an der Austrittsseite offen sind, angeordnet sind.

6. Abgasreinigungsanordnung nach Anspruch 5, wobei die den an seiner Austrittsseite bzw. an seiner Eintrittsseite geschlossenen Abgasströmungskanal (21) begrenzenden Platten (13,13) an der Austrittsseite bzw. an der Eintrittsseite entlang einer Linie quer zur Strömungsrichtung aneinander anliegen.

7. Abgasreinigungsanordnung nach Anspruch 6, wobei die den an seiner Austrittsseite bzw. an seiner Eintrittsseite geschlossenen Abgasströmungskanal (21) begrenzenden Platten (13,13) entlang der Linie durch Kleben oder/und durch Verschweißen oder/und durch Falzen miteinander verbunden sind.

8. Abgasreinigungsanordnung nach Anspruch 6, wobei die den an seiner Austrittsseite bzw. an seiner Eintrittsseite geschlossenen Abgasströmungskanal (21) begrenzenden Platten (13,13) an der Austrittsseite bzw. an der Eintrittsseite durch einen quer zur Strömungsrichtung sich erstreckenden durchgehenden Steg (29) miteinander verbunden sind.

9. Abgasreinigungsanordnung nach Anspruch 6, wobei die den an seiner Austrittsseite bzw. an seiner Eintrittsseite geschlossenen Abgasströmungskanal begrenzenden Platten (13,13) an der Austrittsseite bzw. an der Eintrittsseite integral miteinander verbunden sind.

10. Abgasreinigungsanordnung nach einem der Ansprüche 1 bis 9, wobei ein Hauptebenenabstand zwischen jeweils zwei unmittelbar benachbarten Platten (13,13) einen Wert in einem Bereich von 0,5 mm bis 8,0 mm, insbesondere 1,0 mm bis 4,0 mm, und weiter bevorzugt von 1,5 bis 3,0 mm, aufweist.

11. Abgasreinigungsanordnung nach einem der Ansprüche 2 bis 10, wobei eine Auslenkung der Wellenberge bzw. Wellentäler jeweils aus den Hauptebenen größer als 1 mm ist.

12. Abgasreinigungsanordnung nach einem der Ansprüche 2 bis 11, wobei eine Auslenkung der Wellenberge bzw. Wellentäler aus deren Hauptebenen kleiner als 7 mm, insbesondere kleiner als 5 mm und weiter bevorzugt kleiner als 3 mm ist.

13. Abgasreinigungsanordnung nach einem der Ansprüche 2 bis 12, wobei ein lateraler Abstand (Wellenlänge) in Plattenerstreckungsrichtung zwischen einander benachbarten Wellenbergen bzw. Wellentälern größer als 2 mm, insbesondere größer als 3 mm ist.

14. Abgasreinigungsanordnung nach einem der Ansprüche 2 bis 13, wobei ein lateraler Abstand (Wellenlänge) in Plattenerstreckungsrichtung zwischen einander benachbarten Wellenbergen bzw. Wellentälern kleiner als 7 mm, insbesondere kleiner als 5 mm ist.

15. Abgasreinigungsanordnung nach einem der Ansprüche 1 bis 14, wobei eine Dicke der Platten (13) größer als 0,1 mm, insbesondere größer als 0,3 mm ist.

16. Abgasreinigungsanordnung nach einem der Ansprüche 1 bis 15, wobei eine Dicke der Platten (13) kleiner als 2,0 mm, insbesondere kleiner als 1,2 mm ist.

17. Abgasreinigungsanordnung nach einem der Ansprüche 1 bis 16, wobei ein Werkstoff der Platten (13) ein Metallblech ist.

18. Abgasreinigungsanordnung nach einem der Ansprüche 1 bis 16, wobei ein Werkstoff der Platten (13) ein für das Abgas permeabler poröser Werkstoff ist.

19. Abgasreinigungsanordnung nach Anspruch 18, wobei der Werkstoff ein Gewebe oder/und ein Vlies oder/und ein Geflecht aus einem Fasermaterial ist.

20. Abgasreinigungsanordnung nach Anspruch 19, wobei das Fasermaterial Metallfasern oder/und Keramikfasern umfaßt.

21. Abgasreinigungsanordnung nach einem der Ansprüche 1 bis 20, wobei ein Werkstoff der Platten (13) aus einem Pulvermaterial gefertigt ist.

22. Abgasreinigungsanordnung nach einem der Ansprüche 1 bis 20, wobei ein Werkstoff der Platten aus einem Schaum gefertigt ist.

23. Abgasreinigungsanordnung nach einem der Ansprüche 1 bis 20, wobei ein Werkstoff der Platten (13) als Sinterkörper gefertigt ist.

24. Abgasreinigungsanordnung nach einem der Ansprüche 1 bis 23, wobei ein Werkstoff der Platten (13) ein Katalysatormaterial, insbesondere aus wenigstens einem Edelmetall oder/und wenigstens einem Metalloxid oder/und wenigstens einem Mischoxid, umfaßt, oder/und ein Sauerstoff-Speichermaterial umfaßt, welches insbesondere Cer oder/und ein Cer-Oxid umfaßt und mit diesem insbesondere beschichtet ist.

25. Abgasreinigungsanordnung nach einem der Ansprüche 1 bis 24, wobei der Stapel (15) an seiner Aussenseite in einem Bereich zwischen der Eintrittsseite und der Austrittsseite von wenigstens einer Matte aus dem Fasermaterial oder/und wenigstens einer Faservliesschicht begrenzt ist.

26. Abgasreinigungsanordnung nach Anspruch 25, wobei die wenigstens eine Fasermaterialmatte oder/und die wenigstens eine Faservliesschicht den Stapel (15) in dem Bereich zwischen der Eintrittsseite und der Austrittsseite vollständig umgibt.

27. Verfahren zum Herstellen einer Abgasreinigungsanordnung zur Reinigung eines Abgases einer Verbrennungskraftmaschine, insbesondere zum Herstellen der Abgasreinigungsanordnung nach einem der Ansprüche 1 bis 26, wobei das Verfahren umfaßt:

   Bereitstellen eines Materialbands (31);
   Formen des Materialbands (31) mit Hilfe von Prägewalzen (33,35) zu einem gewellten Materialband (31), wobei in dem Materialband (31) entlang von im wesentlichen geradlinig sich erstreckenden Linien abwechselnd Wellenberge und Wellentäler gebildet werden, und wobei die Wellenberge und/oder Wellentäler in Abschnitten in Erstreckungsrichtung des gewellten Materialbandes (31) mit Deformationsbereichen ausgebildet werden, wobei die Deformationsbereiche in wenigstens einem Materialbandabschnitt wenigstens bereichsweise mit einem geringeren Abstand von einer Hauptebene des gewellten Materialbandes (31) angeordnet sind als entlang der Linien zwischen benachbarter Deformationsbereiche, so daß nach
   Falten des Materialbandes (31) an quer zu einer Erstreckungsrichtung des Materialbandes (31) sich erstreckenden Faltlinien (32), welche mit einem Abstand in Erstreckungsrichtung des Materialbandes (31) voneinander angeordnet sind, und nach
   Legen des gefalteten Materialbandes (31) in Abschnitten derart übereinander, daß ein Stapel (15f) gebildet wird, zwei im Stapel (15f) einander benachbarte Materialbandabschnitte an den Deformationsbereichen aneinander anliegen; und
   Einbauen des Stapels (15f) in ein Gehäuse.

28. Verfahren nach Anspruch 27, wobei das Materialband (31) aus einem für das zu reinigende Abgas permeablen porösen Werkstoff gebildet ist.

29. Verfahren nach Anspruch 27 oder 28, wobei das Materialband (31) beim Falten zwischen zwei Prägewalzen (33,35) zum Einbringen von Verformungs-bereichen entlang der Faltlinie (32) hindurchgeführt wird.

30. Verfahren nach Anspruch 29, wobei die Verfor-mungsbereiche durch Eindrücken des Materialban-des (31) in eine an einer ersten der beiden Walzen (35) vorgesehene wenigstens eine Längsausnehmung (39) mittels eines an einer zweiten der beiden Walzen (33) vorgesehenen entsprechenden wenigstens eines Längswulstes (37) eingebracht werden.

31. Verfahren nach Anspruch 30, wobei die wenigstens eine Längsausnehmung (39) sich parallel zu einer Achse (35') der ersten Walze (35) erstreckt und der wenigstens eine Wulst (37) sich parallel zu einer Achse (33') der zweiten Walze (33) erstreckt.

32. Verfahren nach einem der Ansprüche 29 bis 31, wobei zum Wellen des Materialbandes (31) an einer Oberfläche (33",35") der ersten und der zweiten Walze (33,35) in Umfangsrichtung der Walze (33,35) benachbarte Wulste (37) und Ausnehmungen (39) vorgesehen sind, welche sich spiralförmig um die Achsen (33',35') der Walzen (33,35) erstrecken.

33. Verfahren nach Anspruch 32, wobei an der ersten und der zweiten Walze (33,35) jeweils eine gerade Anzahl von Umfangsbereichen (43,45) vorgesehen ist, welche jeweils in Umfangsrichtung einerseits durch einen Längswulst (37) und andererseits durch eine Längsausnehmung (39) begrenzt sind, und wobei Orientierungen der spiralförmigen Wulste (37) und Ausnehmungen (39) in einander in Umfangsrichtung benachbarten Umfangsbereichen einander entgegengesetzt sind.

34. Verfahren nach einem der Ansprüche 29 bis 33, wobei zwischen dem Gehäuse und dem Stapel eine Matte aus einem Drahtgestrickmaterial oder/und Drahtvliesmaterial oder/und einem Keramikmaterial oder/und einem keramischen Fasermaterial eingefügt wird.

**Claims**

1. An exhaust gas purification arrangement for purifying an exhaust gas of a combustion engine, comprising:

a plurality of plates (13) having a multitude of respective adjoining surface areas, which are alternately curved in directions opposite to each other,

wherein the plurality of plates (13) is superposed into a stack (15), two adjacent plates (13, 13) in the stack (15) having a multitude of contact surfaces (17, 17'), at which the two plates (13, 13) abut each other, and wherein between adjacent abutting surfaces in a plate plane the two plates (13, 13) have a distance therebetween, such that exhaust gas flow channels (21) are confined by the two plates (13, 13), and wherein for at least 50% of the contact surfaces (17, 17') of the two plates (13, 13):

$$\frac{D}{A} > 0.05 \; ;$$

wherein
D is a maximal elongation of the contact surfaces (17, 17') in the plate plane; and
A is a distance between main planes of the two plates (13, 13).

2. The exhaust gas purification arrangement according to claim 1, wherein at least one of the two adjacent plates (13, 13) has a wavy plate structure, such that wave crests and wave troughs are alternately formed along lines extending substantially linearly.

3. The exhaust gas purification arrangement according to claim 2, wherein the contact surfaces (17, 17') of the at least one plate (13) are arranged in at least one area with a lesser distance from the main plane than outside this area along the lines, along which the wave crests or the wave troughs, respectively, are formed.

4. The exhaust gas purification arrangement according to claim 2 or 3, wherein the wave crests and wave troughs of the respective two adjacent plates (13, 13) in the stack (15) are oriented relative to each other at an angle of more than 10°.

5. The exhaust gas purification arrangement according to any one of claims 1 to 4, wherein the exhaust gas flow channels (21), which are open at the entry side and closed at the exit side are alternately arranged in the stacking direction with exhaust gas flow channels (21) which are closed at the entry side and open at the exit side.

6. The exhaust gas purification arrangement according to claim 5, wherein the plates (13, 13) confining the exhaust gas flow channel (21) closed at its exit side or at its entry side, respectively, abut each other at the exit side or entry side, respectively, along a line oriented transversely to the flow direction.

7. The exhaust gas purification arrangement according to claim 6, wherein the plates (13, 13) confining the exhaust gas flow channel (21) closed at its exit side or at its entry side, respectively, are joined to each other along the line by adhering or/and by welding or/and by folding.

8. The exhaust gas purification arrangement according to claim 6, wherein the plates (13, 13) confining the exhaust gas flow channel (21) closed at its exit side or at its entry side, respectively, are joined to each other at the exit side or entry side, respectively, by means of a continuous strut (29) extending transversely to the flow direction.

9. The exhaust gas purification arrangement according to claim 6, wherein the plates (13, 13) confining the exhaust gas flow channel closed at its exit side or at its entry side, respectively, are integrally joined to each other at the exit side or entry side, respectively.

10. The exhaust gas purification arrangement according to any one of claims 1 to 9, wherein a main plane distance between respective two immediately adjacent plates (13, 13) has a value in a range from 0.5 mm to 8.0 mm, particularly from 1.0 mm to 4.0 mm and further preferably from 1.5 mm to 3.0 mm.

11. The exhaust gas purification arrangement according to any one of claims 2 to 10, wherein a bulge of the wave crests or wave troughs, respectively, from the main planes is greater than 1mm.

12. The exhaust gas purification arrangement according to any one of claims 2 to 11, wherein a bulge of the wave crests or wave troughs, respectively, from the main planes thereof is less than 7 mm, particularly less than 5 mm and further preferably less than 3 mm.

13. The exhaust gas purification arrangement according to any one of claims 2 to 12, wherein a lateral distance (wave length) in the plate extension direction between adjacent wave crests or wave troughs, respectively, is greater than 2 mm, particularly greater than 3 mm.

14. The exhaust gas purification arrangement according to any one of claims 2 to 13, wherein a lateral distance (wave length) in the plate extension direction between adjacent wave crests or wave troughs, respectively, is less than 7 mm, particularly less than 5 mm.

15. The exhaust gas purification arrangement according to any one of claims 1 to 14, wherein a thickness of the plates (13) is greater than 0.1 mm, particularly greater than 0.3 mm.

16. The exhaust gas purification arrangement according to any one of claims 1 to 15, wherein a thickness of the plates (13) is less than 2.0 mm, particularly less than 1.2 mm.

17. The exhaust gas purification arrangement according to any one of claims 1 to 16, wherein a material of the plates (13) is a metal sheet.

18. The exhaust gas purification arrangement according to any one of claims 1 to 16, wherein a material of the plates (13) is a porous material permeable to exhaust gas.

19. The exhaust gas purification arrangement according to claim 18, wherein the material is a fabric or/and a nonwoven or/and a braiding of a fiber material.

20. The exhaust gas purification arrangement according to claim 19, wherein the fiber material comprises metal fibers or/and ceramic fibers.

21. The exhaust gas purification arrangement according to any one of claims 1 to 20, wherein a material of the plates (13) is made from a powder material.

22. The exhaust gas purification arrangement according to any one of claims 1 to 20, wherein a material of the plates is made from a foam.

23. The exhaust gas purification arrangement according to any one of claims 1 to 20, wherein a material of the plates (13) is made as a sintered body.

24. The exhaust gas purification arrangement according to any one of claims 1 to 23, wherein a material of the plates (13) comprises a catalytic material, particularly of at least one noble metal or/and at least one metal oxide or/and at least one compound oxide or/and comprises an oxygen storing material comprising in particular cerium or/and a cerium oxide and is in particular coated therewith.

25. The exhaust gas purification arrangement according to any one of claims 1 to 24, wherein the stack (15) is confined at its outside in an area between the entry side and the exit side by at least one mat of the fiber material or/and at least one fibrous nonwoven layer.

26. The exhaust gas purification arrangement according to claim 25, wherein the at least one fiber material mat or/and the at least one fibrous nonwoven layer completely surrounds the stack (15) in the area between the entry side and the exit side.

27. A method for manufacturing an exhaust gas purification arrangement for purifying an exhaust gas in a combustion engine, particularly for manufacturing the exhaust gas purification arrangement according to any one of claims 1 to 26, the method comprising:

> providing a material band (31);
> shaping the material band (31) by means of embossing rollers (33, 35) into a wavy material band (31), wherein wave crests and wave troughs are formed alternately in the material band (31) along lines extending substantially linearly, and wherein said wave crests and/or wave troughs are formed with deformation areas in sections in the extension direction of the wavy material band (31), said deformation areas being arranged in at least one material band section at least in parts of the area with a smaller distance to a main plane of the wavy material band (31) than along the lines between adjacent deformation areas, such that after
> folding the material band (31) at folding lines (32) extending transversely to the extension direction of the material band (31), which are spaced in relation to each other in the extension direction of the material band (31), and after
> laying the folded material band (31) in sections on top of each other, such that a stack (15f) is formed, adjacent material band sections in the stack (15f) abut each other at the deformation areas; and
> fitting the stack (15f) in a housing.

28. The method according to claim 27, wherein the material band (31) is formed of a porous material permeable to the exhaust gas to be purified.

29. The method according to claim 27 or 28, wherein the material band (31) is passed between two embossing rollers (33, 35) during folding for introducing deformation areas along the folding lines (32).

30. The method according to claim 29, wherein the deformation areas are introduced by pressing the material band (31) in at least one longitudinal recess (39) provided at a first of the two rollers (35) by means of a corresponding at least one longitudinal bead (37) provided at a second of the two rollers (33).

31. The method according to claim 30, wherein the at least one longitudinal recess (39) extends in parallel to an axis (35') of the first roller (35) and the at least one bead (37) extends in parallel to an axis (33') of the second roller (33).

32. The method according to any one of claims 29 to 31, wherein for crimping the material band (31) adjacent beads (37) and recesses (39) are provided at the surface (33'', 35'') of the first and second rollers (33, 35) in the circumferential direction of the roller (33, 35) which extend helically around the axes (33', 35') of the rollers (33, 35).

33. The method according to claim 32, wherein, at the first and second rollers (33, 35), an even number of circumferential areas (43, 45) are provided, which are confined in the circumferential direction by a longitudinal bead (37) on the one hand and by a longitudinal recess (39) on the other hand, and wherein orientations of the helical beads (37) and recesses (39) are opposed to each other in circumferential areas adjacent in the circumferential direction.

34. The method according to any one of the claims 29 to 33, wherein a mat made of a wire mesh material or/and a wire nonwoven material or/and a ceramic material or/and a ceramic fiber material is inserted between the housing and the stack.

**Revendications**

1. Dispositif de purification des gaz d'échappement pour purifier les gaz d'échappement d'un moteur à combustion interne, comprenant :

> une pluralité de plaques (13), lesquelles présentent chacune en juxtaposition une multitude de zones superficielles, lesquelles sont courbées alternativement dans des directions opposées l'une à l'autre,
> la pluralité de plaques (13) étant assemblée pour former une pile (15), deux plaques (13, 13) contiguës dans la pile (15) présentant chacune une multiplicité de surfaces de contact (17, 17'), au niveau desquelles les deux plaques (13, 13) viennent en appui, et les deux plaques (13, 13) présentant un intervalle entre des zones d'appui voisines l'une de l'autre dans un plan de plaques, de sorte que des canaux d'écoulement de gaz d'échappement (21) sont délimités par les deux plaques (13, 13), et la règle étant pour au moins 50% des surfaces de contact (17, 17') des deux plaques (13, 13) :

$$D/A > 0,05 \; ;$$

> où
> D est une étendue maximale des surfaces de contact (17, 17') dans le plan de plaques ; et
> A est un intervalle entre des plans principaux des deux plaques (13, 13).

2. Dispositif de purification des gaz d'échappement selon la revendication 1, dans lequel au moins une des deux plaques contiguës (13, 13) présente une structure de plaque ondulée, de sorte que des sommets d'ondulation et des creux d'ondulation sont formés alternativement le long de lignes s'étendant essentiellement de façon rectiligne.

3. Dispositif de purification des gaz d'échappement selon la revendication 2, dans lequel les surfaces de contact (17, 17') de la au moins une plaque (13) sont disposées, dans au moins une zone, à un intervalle par rapport au plan principal qui est plus faible qu'à l'extérieur de cette zone le long des lignes le long desquelles les sommets d'ondulation et les creux d'ondulation sont formés.

4. Dispositif de purification des gaz d'échappement selon la revendication 2 ou 3, dans lequel les sommets d'ondulation et les creux d'ondulation des deux plaques (13, 13) à chaque fois contiguës dans la pile (15) sont orientées sous un angle de plus de 10° l'une par rapport à l'autre.

5. Dispositif de purification des gaz d'échappement selon l'une quelconque des revendications 1 à 4, dans lequel des canaux d'écoulement de gaz d'échappement (21) qui sont ouverts côté entrée et fermés côté sortie sont disposés, dans le sens d'empilement, alternativement avec des canaux d'écoulement de gaz d'échappement (21) qui sont fermés côté entrée et ouverts côté sortie.

6. Dispositif de purification des gaz d'échappement selon la revendication 5, dans lequel les plaques (13, 13) délimitant le canal d'écoulement des gaz (21) fermé côté sortie ou côté entrée se joignent entre elles, au niveau du côté sortie ou du côté entrée, le long d'une ligne perpendiculaire au sens d'écoulement.

7. Dispositif de purification des gaz d'échappement selon la revendication 6, dans lequel les plaques (13, 13) délimitant le canal d'écoulement des gaz (21) fermé côté sortie ou côté entrée sont rattachées l'une à l'autre le long de la ligne par collage et/ou par soudage et/ou par sertissage.

8. Dispositif de purification des gaz d'échappement selon la revendication 6, dans lequel les plaques (13, 13) délimitant le canal d'écoulement des gaz (21) fermé côté sortie ou côté entrée sont rattachées l'une à l'autre, au niveau du côté sortie ou du côté entrée, par une branche (29) continue s'étendant perpendiculairement au sens d'écoulement.

9. Dispositif de purification des gaz d'échappement selon la revendication 6, dans lequel les plaques (13, 13) délimitant le canal d'écoulement des gaz fermé côté sortie ou côté entrée sont rattachées l'une à l'autre intégralement au niveau du côté sortie ou du côté entrée.

10. Dispositif de purification des gaz d'échappement selon l'une quelconque des revendications 1 à 9, dans lequel un intervalle de plan principal entre deux plaques (13, 13) directement voisines présente une valeur située dans une plage de 0,5 mm à 8,0 mm, en particulier de 1,0 mm à 4,0 mm, et d'une manière également préférée de 1,5 mm à 3,0 mm.

11. Dispositif de purification des gaz d'échappement selon l'une quelconque des revendications 2 à 10, dans lequel une déviation des sommets d'ondulation et des creux d'ondulation à chaque fois à partir des plans principaux est supérieure à 1 mm.

12. Dispositif de purification des gaz d'échappement selon l'une quelconque des revendications 2 à 11, dans lequel une déviation des sommets d'ondulation et des creux d'ondulation à partir de leurs plans principaux est inférieure à 7 mm, en particulier inférieure à 5 mm et d'une manière également préférée inférieure à 3 mm.

13. Dispositif de purification des gaz d'échappement selon l'une quelconque des revendications 2 à 12, dans lequel un intervalle latéral (longueur d'ondulation) dans le sens de développement de plaque entre des sommets d'ondulation ou des creux d'ondulation contigus est supérieur à 2 mm, en particulier supérieur à 3 mm.

14. Dispositif de purification des gaz d'échappement selon l'une quelconque des revendications 2 à 13, dans lequel un intervalle latéral (longueur d'ondulation) dans le sens de développement de plaque entre des sommets d'ondulation ou des creux d'ondulation contigus est inférieur à 7 mm, en particulier inférieur à 5 mm.

15. Dispositif de purification des gaz d'échappement selon l'une quelconque des revendications 1 à 14, dans lequel une épaisseur des plaques (13) est supérieure à 0,1 mm, en particulier supérieure à 0,3 mm.

16. Dispositif de purification des gaz d'échappement selon l'une quelconque des revendications 1 à 15, dans lequel une épaisseur des plaques (13) est inférieure à 2,0 mm, en particulier inférieure à 1,2 mm.

17. Dispositif de purification des gaz d'échappement selon l'une quelconque des revendications 1 à 16, dans lequel un matériau des plaques (13) est une tôle métallique.

18. Dispositif de purification des gaz d'échappement selon l'une quelconque des revendications 1 à 16, dans lequel un matériau des plaques (13) est un matériau poreux perméable aux gaz d'échappement.

**19.** Dispositif de purification des gaz d'échappement selon la revendication 18, dans lequel le matériau est un tissu et/ou un non-tissé et/ou un produit tressé réalisé à partir de fibres.

**20.** Dispositif de purification des gaz d'échappement selon la revendication 19, dans lequel le matériau à base de fibres comprend des fibres métalliques et/ou des fibres céramiques.

**21.** Dispositif de purification des gaz d'échappement selon l'une quelconque des revendications 1 à 20, dans lequel l'un des matériaux des plaques (13) est réalisé à base d'une poudre.

**22.** Dispositif de purification des gaz d'échappement selon l'une quelconque des revendications 1 à 20, dans lequel l'un des matériaux des plaques est une mousse.

**23.** Dispositif de purification des gaz d'échappement selon l'une quelconque des revendications 1 à 20, dans lequel un matériau des plaques (13) est réalisé sous forme de comprimé fritté.

**24.** Dispositif de purification des gaz d'échappement selon l'une quelconque des revendications 1 à 23, dans lequel un matériau des plaques (13) contient un matériau catalyseur, en particulier en au moins un métal précieux et/ou au moins un oxyde métallique et/ou au moins un oxyde mixte, et/ou contient un matériau accumulateur d'oxygène, lequel contient en particulier du cérium et/ou un oxyde cérique et est revêtu en particulier par celui-ci.

**25.** Dispositif de purification des gaz d'échappement selon l'une quelconque des revendications 1 à 24, dans lequel la pile (15) est délimitée, au niveau son côté extérieur, par au moins une nappe en matériau à base de fibres et/ou au moins une couche de non-tissé dans une zone entre le côté entrée et le côté sortie.

**26.** Dispositif de purification des gaz d'échappement selon la revendication 25, dans lequel la au moins une nappe en matériau à base de fibres et/ou la au moins une couche de non-tissé entoure la pile (15) dans la zone entre le côté entrée et le côté sortie.

**27.** Procédé de fabrication d'un dispositif de purification des gaz d'échappement pour purifier les gaz d'échappement d'un moteur à combustion interne, en particulier d'un dispositif de purification des gaz d'échappement selon l'une quelconque des revendications 1 à 26, le procédé comprenant :

la mise à disposition d'une bande de matière (31) ;

le formage de la bande de matière (31) à l'aide de cylindres de gaufrage (33, 35) pour former une bande de matière (31) ondulée, des sommets d'ondulation et des creux d'ondulation étant formés alternativement dans la bande de matière (31) le long de lignes s'étendant de façon sensiblement rectiligne, et les sommets d'ondulation et/ou les creux d'ondulation en sections dans le sens de développement de la bande de matière ondulée (31) étant conçus avec des zones de déformation, les zones de déformation étant disposées - dans au moins une section de bande de matière - au moins sectoriellement à un intervalle par rapport à un plan principal de la bande de matière ondulée (31) qui est plus faible que le long des lignes entre des zones de déformation voisines, de sorte qu'après

le pliage de la bande de matière (31) au niveau de lignes de pliage (32) s'étendant perpendiculairement à un sens de développement de la bande de matière (31), lesquelles lignes étant disposées à un certain intervalle les unes des autres dans le sens de développement de la bande de matière (31), et qu'après

la superposition des sections de bande de matière pliée (31) de telle façon qu'une pile (15f) est formée, deux sections de bande de matière contiguës dans la pile (15f) sont juxtaposées l'une contre l'autre au niveau des zones de déformation ; et
le montage de la pile (15f) dans un carter.

**28.** Procédé selon la revendication 27, dans lequel la bande de matière (31) est formée à partir d'un matériau poreux perméable aux gaz à purifier.

**29.** Procédé selon la revendication 27 ou 28, dans lequel la bande de matière (31) passe, lors du pliage, entre deux cylindres de gaufrage (33, 35) pour réaliser des zones de déformation le long des lignes de pliage (32).

**30.** Procédé selon la revendication 29, dans lequel les zones de déformation sont aménagées par enfoncement de la bande de matière (31) dans au moins un évidement longitudinal (39) prévu sur un premier des deux cylindres (35) par l'intermédiaire d'au moins un renflement longitudinal (37) prévu sur un deuxième des deux cylindres (33).

**31.** Procédé selon la revendication 30, dans lequel le au moins un évidement longitudinal (39) s'étend parallèlement à un axe (35') du premier cylindre (35) et le au moins un renflement (37) s'étend parallèlement à un axe (33') du deuxième cylindre (33).

**32.** Procédé selon l'une quelconque des revendications 29 à 31, dans lequel des renflements (37) et des évidements (39) adjacents sont prévus pour l'ondulation de la bande de matière (31) sur une surface (33", 35") des premier et deuxième cylindres (33, 35) dans le sens périphérique des cylindres (33, 35), lesquels renflements et évidements s'étendent en spirale autour des axes (33', 35') des cylindres (33, 35).

33. Procédé selon la revendication 32, dans lequel un nombre pair de zones périphériques (43, 45) est à chaque fois prévu sur les premier et deuxième cylindres (33, 35), lesquelles zones sont chacune délimitées dans le sens périphérique par un renflement longitudinal (37) d'une part et par un évidement longitudinal (39) d'autre part, et dans lequel les orientations des renflements (37) et des évidements (39) en spirale sont opposées l'une à l'autre dans des zones périphériques voisines l'une de l'autre dans le sens périphérique.

34. Procédé selon l'une quelconque des revendications 29 à 33, dans lequel une nappe en matériau à tricot métallique et/ou un voile métallique et/ou un matériau céramique et/ou un matériau céramique à base de fibres est inséré(e) entre le carter et la pile.

**Fig. 1**

**Fig. 2**

Fig. 3

Fig. 3a

Fig. 4

7c

17c

13c

17b

13c

13c

**Fig. 5**

15c

**Fig. 6**

**Fig. 7**

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 1030651 A

- EP 0835684 A2